# EUROPÄISCHE PATENTSCHRIFT

(11) **EP 2 144 067 B1**
(45) Veröffentlichungstag und Bekanntmachung des Hinweises auf die Patenterteilung: **25.04.2012**
(21) Anmeldenummer: 09011368.9
(22) Anmeldetag: 30.09.2006
(51) Int. Cl.: G01N 35/00, B25J 9/02, B25J 11/00, B01L 3/02

(54) **Laborroboteranordnung**
Laboratory robot assembly
Agencement de robot de laboratoire

(30) Priorität: 17.10.2005 DE 102005049920
(43) Veröffentlichungstag der Anmeldung: 13.01.2010
(62) Teilanmeldung aus: 06792332.6
(73) Patentinhaber: Manz Automation AG, 72768 Reutlingen (DE)
(72) Erfinder: Manz, Dieter, 72667 Schlaitdorf (DE); Oberdorfer, Dr. Berend, 72124 Pliezhausen (DE)
(74) Vertreter: Kohler Schmid Möbus

(56) Entgegenhaltungen:
- EP-A- 1 506 814
- WO-A2-03/035239
- DE-A1- 3 805 808
- GB-A- 2 310 006
- JP-A- 2001 211 873
- US-A1- 2004 253 148
- US-B1- 6 592 819

## Beschreibung

Die Erfindung betrifft ein Pipettiermodul mit den Merkmalen des Oberbegriffs des Anspruchs 1 und eine Laborroboteranordnung für den Biowissenschaftsbereich (Life-Science-Bereich) mit den Merkmalen des Oberbegriffs des Anspruchs 5.

Im Life-Sclence-Bereich müssen Flüssigkeiten, Feststoffe und Objekte automatisiert gehandhabt werden. Beispielsweise müssen aus einer Menge von Proben, Proben mit spezifischen Eigenschaften entnommen werden. Die entnommenen Proben müssen entweder analysiert werden oder anderen Proben zugeführt werden. Auch ist es denkbar, dass Proben verdünnt werden müssen. Weitere Anwendungen sind möglich und denkbar. Da diese Vorgänge häufig standardisiert sind, sollten Sie vorzugsweise automatisiert ablaufen. Zu diesem Zweck sind bereits verschiedenste Roboteranordnungen bekannt. Häufig sind die bekannten Anordnungen nur für wenige Aufgaben geeignet.

Aus der WO 03/035239 A2 ist eine Vorrichtung zum Pipettieren bekannt. An einem Pipettierkopf sind Pipettiernadeln angeordnet, die gemeinsam relativ zum Pipettierkopf bewegbar sind. Außerdem sind die Pipettiernadeln zusammen mit dem Pipettierkopf gemeinsam in Z-Richtung bewegbar.

Aus der GB 2310006 A ist ein pneumatischer Aktuator bekannt, mit dem Pipettiernadeln individuell in Z-Richtung verstellt werden können. Die Verstellung erfolgt pneumatisch.

Aus der US 2004/0253148 A1 ist eine Vorrichtung bekannt, mit der der Abstand von Pipettiernadeln von einem vorgegebenen Abstand auf einen anderen vorgegebenen Abstand verändert werden kann.

Die US 6,592,819 B1 offenbart einen Pipettierkopf, dessen Pipettiernadeln mit unterschiedlichem Abstand angeordnet werden können.

Aus der EP 1 506 814 A1 ist ein Pipettierkopf bekannt, der eine Ausgabeleitung aufweist, durch die im Betrieb Flüssigkeit ausgegeben werden kann, und eine Versorgungsleitung, durch die Flüssigkeit dem anderen Ende der Ausgabeleitung zugeführt werden kann. Außerdem sind Mittel zum Bewegen der beiden Leitungen offenbart.

Die DE 38 05 808 A1 offenbart eine automatische Arbeitsstation für mikrobiologische Arbeiten, die einen Arbeitstisch mit mehreren Stellplätzen für Behälter oder dergleichen aufweist. Eine den Arbeitstisch überspannende Brücke ist quer zur Brückenlängsrichtung wahlweise verfahrbar. In Brückenlängsrichtung ist ein Instrurnententräger verfahrbar.

Aufgabe der vorliegenden Erfindung ist es, eine Laborroboteranordnung und ein Pipettiermodul für eine solche Laborroboteranordnung bereitzustellen, mit der unterschiedlichste Aufgaben, die im Life-Science-Bereich anfallen, bearbeitet werden können.

Erfindungsgemäß wird diese Aufgabe durch eine Laborroboteranordnung mit den Merkmalen des Anspruchs 5 und ein Pipettiermodul mit den Merkmalen des Anspruchs 1 gelöst. Die Roboteranordnung kann mehrere Robotermodule aufweisen, die in X-Richtung nebeneinander angeordnet sind, wobei zumindest ein Y-Achsenarm eines ersten Robotermoduls zumindest abschnittsweise entlang des X-Achsenarms eines benachbarten Robotermoduls bewegbar ist. Durch diese Maßnahme wird die Modularität des Systems erhöht. Zudem ist es möglich, dass die Y-Achsenarme nahezu den gesamten Arbeitsbereich überfahren können. Dadurch sind größere Anordnungen von Proben handhabbar. Die Roboteranordnung kann mit einer Verbindung zu einem Ablagesystem ausgestattet sein.

An dem Y-Achsenarm ist eine in Y-Richtung bewegbare Ankoppeleinrichtung zum Ankoppeln eines Arbeitsmoduls vorgesehen. Durch diese Maßnahme ist es möglich, die Roboteranordnung für verschiedene Einsatzzwecke zu nutzen. Während im Stand der Technik beispielsweise Roboteranordnungen bekannt sind, bei denen an einem Y-Achsenarm Pipettiernadeln fest installiert sind und der Y-Achsenarm daher ausschließlich zum Pipettieren verwendet werden kann, ist es mit der erfindungsgemäßen Anordnung möglich, an den Y-Achsenarmen unterschiedlichste Arbeitsmodule anzukoppeln, sodass der Y-Achsenarm je nach angekoppeltem Arbeitsmodul unterschiedlich einsetzbar ist. Beispielsweise kann ein Pipettiermodul oder auch ein Greifer-Modul angekoppelt werden. Durch den Wechsel von Pipettiermodulen können auch Pipettiernadeln schneller ausgetauscht werden. Die erfindungsgemäße Roboteranordnung zeichnet sich daher durch eine große Modularität aus.

Vorzugsweise sind benachbarte Robotermodule miteinander verbindbar. Die Verbindung kann dabei als Rast- und/oder Steckverbindung ausgebildet sein. Benachbarte X-Achsenarme können dadurch zu einem gemeinsamen X-Achsenarm verbunden werden und/oder in Anlage aneinander gehalten werden.

Um ein störungsfreies Übergehen eines Y-Achsenarms auf den X-Achsenarm eines benachbarten Robotermoduls sicherzustellen, ist es vorteilhaft, wenn die den Y-Achsenarmen zugeordneten Kabelführungen benachbarter Robotermodule in unterschiedlichen Ebenen angeordnet sind. Um ein Übergehen eines Y-Achsenarms zu ermöglichen, kann es notwendig sein, die Kabelführung für diesen Y-Achsenarm zu verlängern beziehungsweise standardmäßig eine längere Kabelführung vorzusehen oder eine bestehende Kabelführung durch eine längere zu ersetzen.

Die Robotermodule sind besonders einfach einsetzbar und handhabbar, wenn sie als Tischgerät ausgebildet sind. Werden größere Roboteranordnungen benötigt, können mehrere Robotermodule einfach aneinander gereiht werden.

Bei einer besonders bevorzugten Ausführungsform können an zumindest einem Robotermodul zumindest zwei Y-Achsenarme vorgesehen sein. Beispielsweise kann an einem ersten Y-Achsenarm ein Pipettiermodul und an einem zweiten Y-Achsenarm ein Greifermodul vorgesehen sein. Durch das Pipettiermodul können beispielsweise Proben aus Behältern entnommen werden und durch das Greifermodul können Proben beziehungsweise Behälter ausgetauscht werden. Es ist jedoch auch denkbar, an beiden Y-Achsenarmen Pipettiermodule vorzusehen, um dadurch das Bearbeiten einer Charge zu beschleunigen oder größere Chargen bearbeiten zu können.

Die Einsatzmöglichkeiten werden erweitert, wenn das Arbeitsmodul in Z-Richtung bewegbar ist. Dazu ist es vorzugsweise als Z-Achsenarm ausgebildet oder umfasst einen Z-Achsenarm. Denkbar ist jedoch auch, dass die Ankoppeleinrichtung relativ zum Y-Achsenarm in Z-Richtung bewegbar und antreibbar ist. Wenn das Arbeitsmodul als Z-Achsenarm ausgebildet ist, kann an diesen wiederum ein Arbeitsmodul, wie ein Pipettiermodul oder ein Greifermodul, angekoppelt werden. Alternativ kann an dem anzukoppelnden Arbeitsmodul ein Z-Achsenarm vorgesehen sein, der eine Bewegung des (übrigen) Arbeitsmoduls relativ zum Y-Achsenarm in Z-Richtung erlaubt. Für die Pipettiernadeln eines Pipettiermoduls ergeben sich daher zwei Verstellmöglichkeiten in Z-Richtung, einmal über das Arbeitsmodul relativ zum Y-Achsenarm und einmal relativ zum Arbeitsmodul.

Bei einer bevorzugten Weiterbildung kann vorgesehen sein, dass beide Y-Achsenarme zumindest eine Ankoppeleinrichtung aufweisen. Dadurch können noch mehr unterschiedliche oder gleichartige Arbeitsmodule angekoppelt und eingesetzt werden. Die Modularität und der Einsatzbereich werden dadurch weiter erhöht bzw. vergrößert.

Bei einer besonders bevorzugten Ausführungsform kann vorgesehen sein, dass zumindest ein Y-Achsenarm zwei Ankoppeleinrichtungen aufweist. Vorzugsweise sind die Ankoppeleinrichtungen unabhängig voneinander in Y-Richtung bewegbar. Besonders bevorzugt ist es, wenn sie in X-Richtung gesehen an unterschiedlichen Seiten des Y-Achsenarms angeordnet sind und individuell antreibbar sind.

In bevorzugter Ausgestaltung der Erfindung kann vorgesehen sein, dass die Ankoppeleinrichtung Anschlüsse, insbesondere einen elektrischen Anschluss und/oder Datenanschluss, für das anzukoppelnde Arbeitsmodul aufweist. Es können unterschiedliche Maßnahmen vorgesehen sein, um das Arbeitsmodul an der Ankoppeleinrichtung befestigen zu können. Beispielsweise kann das Arbeitsmodul angeflanscht werden. Es kann jedoch auch eine Rastverbindung oder ein bajonettartiger Verschluss vorgesehen sein.

Um die Elemente des Arbeitsmoduls betätigen zu können, müssen Anschlüsse zur übrigen Roboteranordnung beziehungsweise zum Robotermodul hergestellt werden. Insbesondere ist es vorteilhaft, wenn das Arbeitsmodul über das Robotermodul mit elektrischer Energie versorgt werden kann. Zur Steuerung des Arbeitsmoduls ist es weiterhin vorteilhaft, wenn ein Datenaustausch des Arbeitsmoduls mit einer Steuereinrichtung des Robotermoduls oder der Roboteranordnung möglich ist. Vorzugsweise werden die entsprechenden Verbindungen beim Ankoppeln des Arbeitsmoduls an die Ankoppeleinrichtung selbsttätig hergestellt. Außer den erwähnten Anschlüssen können noch weitere Anschlüsse, beispielsweise ein Pneumatikanschluss oder ein Hydraulikanschluss vorgesehen sein.

Vorzugsweise weist das Robotermodul einen Datenbus, beispielsweise einen CAN-Bus oder Interbus, auf. Daher ist es günstig, wenn der Datenanschluss als Bus-Anbindung, insbesondere als Schnittstelle zu einem CAN-Bus oder Interbus, ausgebildet ist.

Die Relativbewegung des Y-Achsenarms bezüglich des X-Achsenarms und der Ankoppeleinrichtungen bezüglich des Y-Achsenarms erfolgt vorzugsweise über Antriebe. Eine genaue Positionierung wird ermöglicht, wenn zumindest ein Antrieb einen Linearmotor umfasst. Vorzugsweise umfassen alle Achsenantriebe einen Linearmotor. Insbesondere, wenn zwei Ankoppeleinrichtungen an einem Y-Achsenarm vorgesehen sind, können zwei Linearmotoren denselben Stator nutzen. Die Ankoppeleinrichtungen können individuell oder an einem Y-Achsenarm gemeinsam verfahrbar sein.

Die Ausgestaltung des Arbeitsmoduls als Pipettiermodul hat den Vorteil, dass für unterschiedliche Proben unterschiedliche Pipetten und gegebenenfalls Pipetten mit unterschiedlichen Volumina verwendet werden können. Die Pipetten sind daher im Vergleich zum Stand der Technik einfach austauschbar. Ist das Pipettieren abgeschlossen, kann auch das Pipettiermodul gegen ein anderes Arbeitsmodul ausgetauscht werden.

Das Pipettiermodul weist mehrere Pipettiernadelaufnahmen und/oder Pipettiernadeln auf, die relativ zum Pipettiermodul begrenzt, insbesondere individuell, in Y-Richtung bewegbar sind. Dadurch können gleichzeitig Proben aus unterschiedlichen Behältern entnommen werden, die entweder unterschiedlich groß sind oder unterschiedliche Abstände aufweisen. Das Pipettiermodul kann fest installierte Pipettiernadeln aufweisen, mit oder ohne Piercing-Funktionalität. Das Vorsehen von Pipettiernadelaufnahmen hat den Vorteil, dass Einwegpipetten verwendet werden können. Vorzugsweise weist ein Pipettiermodul mehrere, insbesondere 4, 8 oder 12 Pipettiernadelaufnahmen und/oder Pipettiernadeln auf. Bevorzugt sind die Pipettiernadelaufnahmen und/oder Pipettiernadeln individuell in Y-Richtung bewegbar und verstellbar.

Insbesondere eine Laborroboteranordnung für den Biowissenschaftsbereich, umfassend zumindest ein erstes Robotermodul mit einem X-Achsenarm, an dem zumindest ein Y-Achsenarm in X-Richtung bewegbar angeordnet ist, wobei an dem Y-Achsenarm eine in Y-Richtung bewegbare Ankoppeleinrichtung zum Ankoppeln eines Arbeitsmoduls vorgesehen ist und das Arbeitsmodul als Pipettiermodul ausgebildet ist, welches mehrere Pipettiernadelaufnahmen und/oder Pipettiernadeln aufweist, die relativ zum Pipettiermodul begrenzt, insbesondere individuell, in Y-Richtung bewegbar sind, wird als eigenständige Erfindung betrachtet.

Die Abstände zwischen benachbarten Pipettiernadelaufnahmen und/oder Pipettiernadeln können dabei zum Beispiel im Bereich 4 - 25 mm, vorzugsweise 9 - 20 mm einstellbar sein.

Die Verstellung der Position der Pipettiernadelaufnahmen und/oder Pipettiernadeln kann einfach realisiert werden, wenn für die Bewegung der Pipettiernadelaufnahmen und/oder Pipettiernadeln in Y-Richtung (Kugel-)Spindelantriebe, Piezo- oder Zahnstangenantriebe vorgesehen sind.

Da die Behälter unter Umständen in unterschiedlichen horizontalen Lagen angeordnet sind und/oder unterschiedliche Füllstände aufweisen, ist es vorteilhaft, dass die Pipettiernadelaufnahmen und/oder Pipettiernadeln individuell in Z-Richtung relativ zum Arbeitsmodul bewegbar sind.

Für die Bewegung der Pipettiernadelaufnahmen und/oder Pipettiernadeln in Z-Richtung sind dabei in bevorzugter Ausgestaltung der Erfindung Zahnstangenantriebe, Piezoantriebe oder (Kugel-)Spindelantriebe vorgesehen.

Bei einer besonders bevorzugten Ausführungsform der Erfindung kann ein austauschbares Dispensmodul vorgesehen sein, das mit den Pipettiernadeln, insbesondere fluidisch, verbindbar ist. Das Pipettieren kann auf unterschiedliche Art und Weise erfolgen. Beispielsweise können Kolbenhubpipetten, eine Mikropumpe oder ein Pipettieren über eine Flüssigkeitssäule vorgesehen sein. Bei den meisten Pipettierverfahren ist eine Dispenseinrichtung notwendig, die fluidisch mit den Pipetten verbunden ist. Um je nach eingesetztem Pipettiermodul unterschiedliche Pipettierverfahren anwenden zu können, ist es vorteilhaft, wenn die Dispenseinrichtung entsprechend ausgetauscht werden kann und daher ebenfalls als Modul ausgebildet ist.

Die erfindungsgemäße Roboteranordnung, insbesondere ein Robotermodul der Roboteranordnung, kann mit Robotern anderer Hersteller kombiniert werden. Besonders vorteilhaft ist jedoch eine Verwendung als Tischgerät, wobei mit einem Pipettiermodul gleichzeitig mehrere Proben aus einer Anordnung von Behältern entnommen werden. Zu diesem Zweck ist es besonders vorteilhaft, wenn unterhalb des zumindest einen Y-Achsenarms ein Arbeitsdeck vorgesehen ist, das die Proben enthalten kann oder auf dem die Behälter abgestellt sein können. Vorzugsweise ist das Arbeitsdeck austauschbar und an einer Säule des Robotermoduls befestigbar.

Die Roboteranordnung kann beispielsweise als Zelle ausgebildet sein, die einen Knickarmroboter umfasst. Über den Knickarmroboter können Objekte, die beispielsweise analysiert werden müssen, bewegt werden. Mit einem Knickarmroboter können weitere Freiheitsgrade der Bewegung erreicht werden. Außerdem können die Y-Achsenarme des Robotermoduls überwiegend für Analysetätigkeiten verwendet werden.

Besonders bevorzugt ist es, wenn eine Füllstandserkennung zur Detektion des Füllstands eines Behälters vorgesehen ist. Dadurch kann sichergestellt werden, dass eine Pipettiernadel auch in die aufzunehmende Flüssigkeit eintaucht.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine perspektivische Ansicht eines Robotermoduls einer Roboteranordnung;
- Fig. 2: eine perspektivische Ansicht eines Robotermoduls mit Arbeitsdeck;
- Fig. 3: eine Darstellung einer Roboteranordnung mit mehreren Robotermodulen;
- Fig. 4a: eine perspektivische Vorderansicht eines Y-Achsenarms;
- Fig. 4b: eine perspektivische Rückansicht des Y-Achsenarms;
- Fig. 5: eine Darstellung eines Pipettiermoduls;
- Fig. 6: eine weitere Darstellung eines Pipettiermoduls.

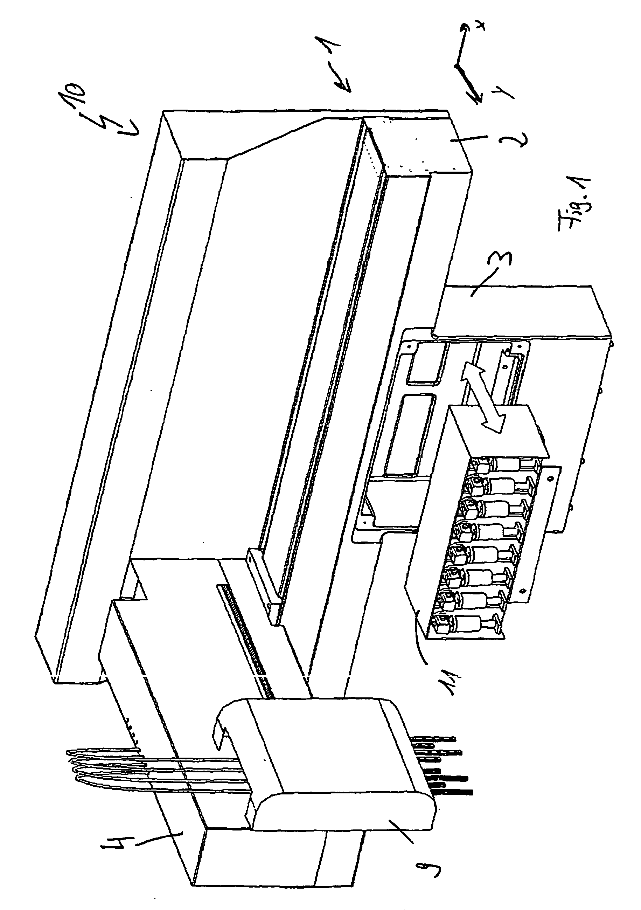

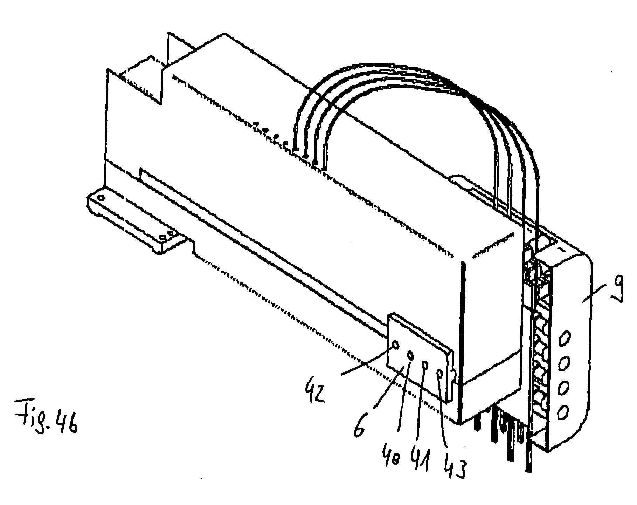

In der Fig. 1 ist ein Robotermodul 1 einer Roboteranordnung 10 gezeigt. Das Robotermodul 1 weist einen X-Achsenarm 2 auf, der an einer Säule 3 des Robotermoduls 1 befestigt ist. An dem X-Achsenarm 2 ist ein Y-Achsenarm 4 angeordnet, wobei der Y-Achsenarm 4 relativ zum X-Achsenarm 2 in Richtung der X-Achse bewegbar ist. Der Y-Achsenarm 4 weist zwei Ankoppeleinrichtungen 6 (siehe Fig. 4b) auf, die zur Kopplung mit einem Arbeitsmodul 9 geeignet sind. Im Ausführungsbeispiel ist das Arbeitsmodul 9 als Pipettiermodul ausgebildet. Die Ankoppeleinrichtungen 6 und somit das Arbeitsmodul 9 sind in Richtung der Y-Achsen relativ zum Y-Achsenarm 4 bewegbar. Zum Bewegen der Ankoppeleinrichtungen 6 und des Y-Achsenarms 4 sind Linearmotoren vorgesehen, die in den Achsenarmen angeordnet sind. An der Säule 3 ist ein Dispensmodul 11 angeordnet, welches mit Pipettiernadeln des Arbeitsmoduls 9 über Schlauchleitungen verbindbar ist.

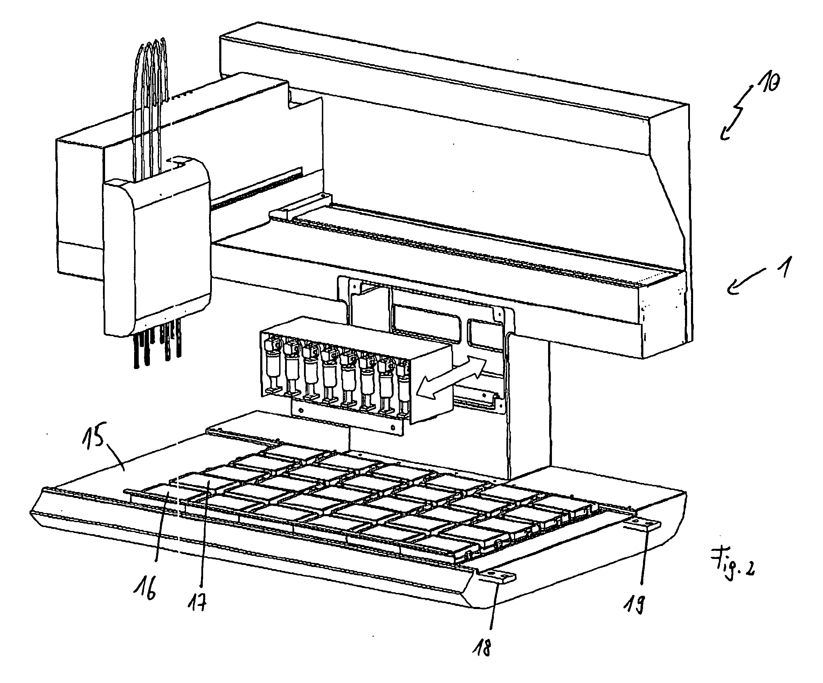

Im Unterschied zur Darstellung der Fig. 1 weist die Roboteranordnung 10 gemäß der Fig. 2 noch zusätzlich ein Arbeitsdeck 15 auf, auf dem unterschiedliche Proben 16, 17, die pipettiert werden müssen, angeordnet sein können. Wie später noch näher erläutert werden wird, können die Abstände der Pipettiernadeln auf die Abstände der Proben 16,17 angepasst werden. Das Arbeitsdeck 15 ist an der Säule 3 befestigbar und austauschbar. Einenends weist das Arbeitsdeck 15 Laschen 18, 19 auf, die zum Anschluss eines benachbarten Robotermoduls 1 dienen.

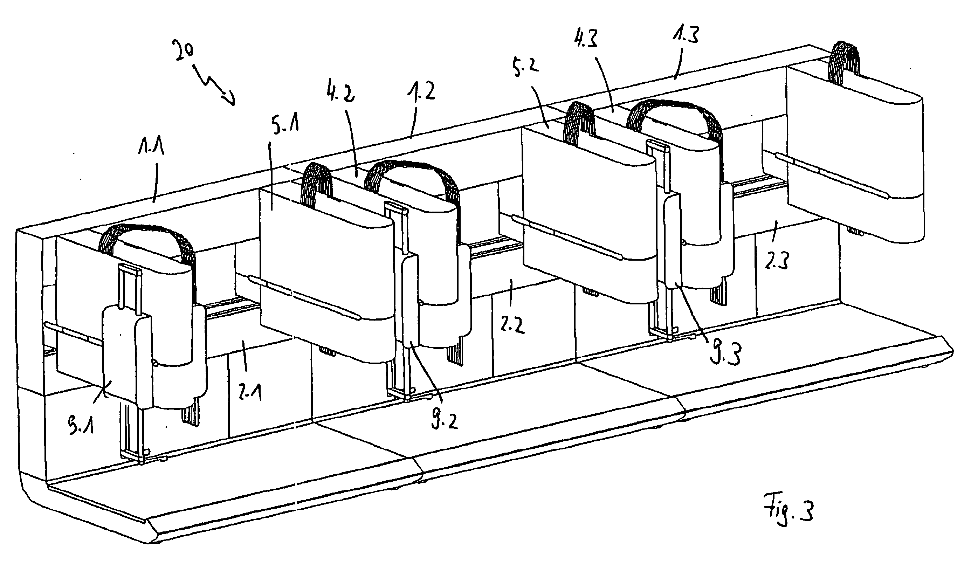

In der Fig. 3 sind drei gleichartige Robotermodule 1.1, 1.2, 1.3 aneinander gereiht, und ergeben somit eine Roboteranordnung 20. Die Besonderheit der Roboteranordnung 20 liegt darin, dass die Y-Achsenarme 5.1, 4.2, 5.2, 4.3 auf den X-Achsenarm 2.1, 2.2, 2.3 des jeweils benachbarten Robotermoduls 1.1, 1.2, 1.3 verfahren werden können. Die Arbeitsmodule 9.1, 9.2, 9.3 sind hier als Greifer ausgebildet und bezüglich der zugeordneten Y-Achsenarme in Z-Richtung bewegbar.

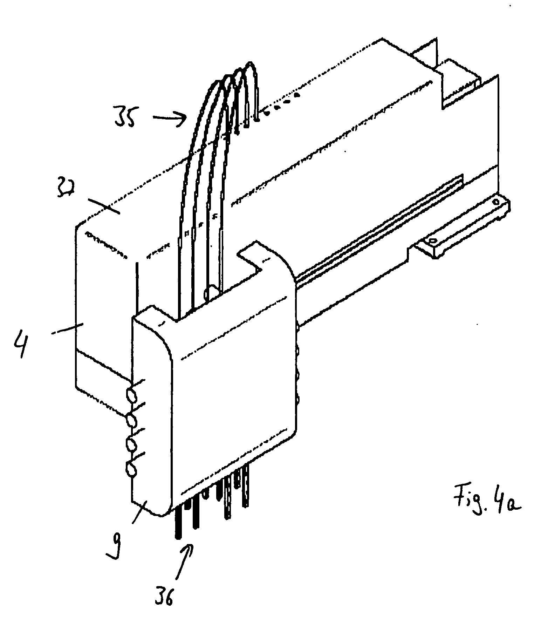

In der Detaildarstellung des Y-Achsenarms 4 der Fig. 4a sind Schlauchleitungen 35 zu erkennen, die an das Arbeitsmodul 9, insbesondere dessen Pipettiernadeln 36 angeschlossen sind. Anderenends sind die Schlauchleitungen 35 in ein Gehäuse 37 des Y-Achsenarms 4 geführt und gelangen letztendlich zu dem Dispensmodul 11, das in der Säule 3 angeordnet ist.

Gemäß der Rückansicht der Fig. 4b weist die Ankoppeleinrichtung 6 mehrere Anschlüsse 40, 41 auf, wobei der Anschluss 40 als elektrischer Anschluss und der Anschluss 41 als Datenanschluss ausgebildet sind. Über die Gewindebohrungen 42, 43 kann ein Arbeitsmodul 9 angeflanscht werden.

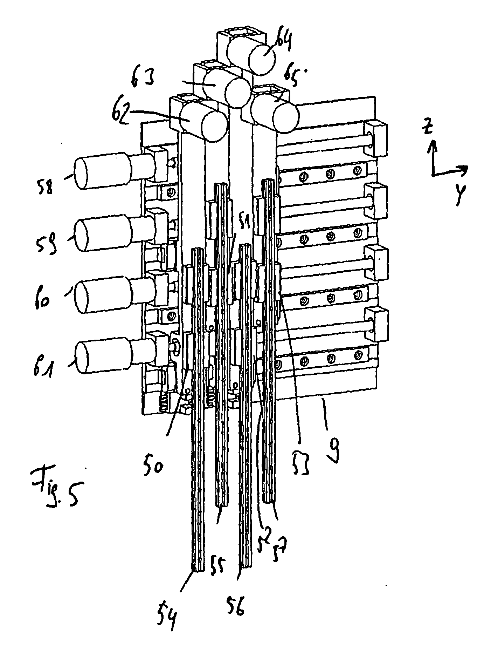

In der Fig. 5 ist ein als Pipettiermodul ausgebildetes Arbeitsmodul 9 ohne Abdeckungen, jedoch nur schematisch, dargestellt. An den Pipettiernadelaufnahmen 50, 51, 52, 53 sind Pipettiernadeln 54, 55, 56, 57 gehalten. Die Pipettiernadelaufnahmen 50 - 53 und somit die Pipettiernadeln 54 - 57 sind begrenzt in Y-Richtung bewegbar. Die Abstände zwischen den Pipettiernadeln 54 - 57 lassen sich daher individuell einstellen. Die Verstellbarkeit in Y-Richtung wird durch Spindelantriebe 58, 59, 60, 61 bewirkt. Außerdem sind die Pipettiernadelaufnahmen 50 - 53 und damit die Pipettiernadeln 54 - 57 in Z-Richtung verstellbar. Die Verstellung in Z-Richtung erfolgt über Zahnstangenantriebe 62, 63, 64, 65. Die Pipettiernadeln 54 - 57 sind austauschbar. Sie können fluidisch mit der Dispenseinrichtung 11 verbunden werden.

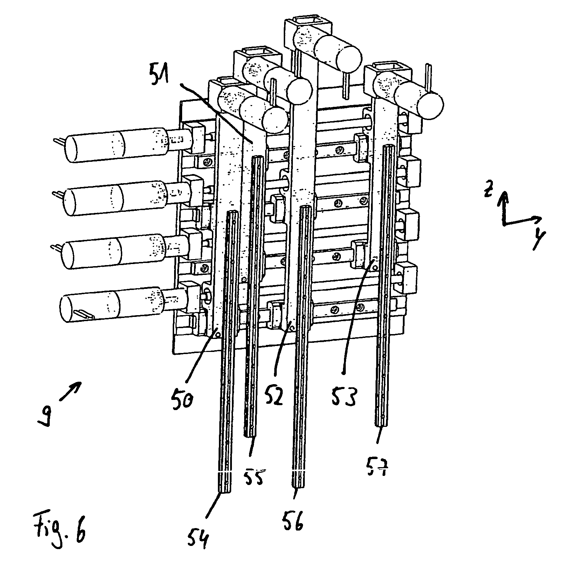

Aus der Fig. 6 wird deutlich, dass die Pipettiernadelaufnahmen 50 - 53 und damit die Pipettiernadeln 54 - 57 sowohl in Y-Richtung als auch in Z-Richtung individuell und unabhängig voneinander verstellbar sind. Insbesondere lassen sich unterschiedliche Abstände zwischen den Pipettiernadelaufnahmen 50 - 53 in Y-Richtung realisieren.

## Patentansprüche

1. Pipettiermodul (9, 9.1, 9.2, 9.3) für einen Laborroboter mit mehreren Pipettiernadelaufnahmen (50 - 53) und/oder Pipettiernadeln (54 - 57), wobei die Pipettiernadelaufnahmen (50 - 53) und/oder Pipettiernadeln (54 - 57) relativ zum Pipettiermodul begrenzt in horizontaler Y-Richtung bewegbar sind, **dadurch gekennzeichnet, dass** die Pipettiernadelaufnahmen (50 - 53) und/oder Pipettiernadeln (54 - 57) individuell in vertikaler Z-Richtung relativ zum Pipettiermodul (9, 9.1, 9.2, 9.3) bewegbar sind.

2. Pipettiermodul nach Anspruch 1, **dadurch gekennzeichnet, dass** die Abstände zwischen benachbarten Pipettiernadelaufnahmen (50 - 53) und/oder Pipettiernadeln (54 - 57) im Bereich 4 - 25 mm einstellbar sind.

3. Pipettiermodul nach einem der vorhergehenden Ansprüche, **dadurch gekennzeichnet, dass** für die Bewegung der Pipettiernadelaufnahmen (50 - 53) und/oder Pipettiernadeln (54 - 57) in Y-Richtung (Kugel-)Spindelantriebe (58 - 61), Piezo- oder Zahnstangenantriebe vorgesehen sind.

4. Pipettiermodul nach einem der vorhergehenden Ansprüche, **dadurch gekennzeichnet, dass** zur Bewegung der Pipettiernadelaufnahmen (50 - 53) und/oder Pipettiernadeln (54 - 57) in Z-Richtung Zahnstangenantriebe, Piezoantriebe oder (Kugel-)Spindelantriebe vorgesehen sind.

5. Laborroboteranordnung (10, 20) für den Biowissenschaftsbereich, umfassend zumindest ein erstes Robotermodul (1, 1.1, 1.2, 1.3) mit einem X-Achsenarm (2, 2.1, 2.2, 2.3), an dem zumindest ein Y-Achsenarm (4, 4.2, 4.3, 5.1, 5.2) in X-Richtung bewegbar angeordnet ist, wobei an dem Y-Achsenarm (4, 4.2, 4.3, 5.1, 5.2) eine in Y-Richtung bewegbare Ankoppeleinrichtung (6) zum Ankoppeln eines Arbeitsmoduls (9, 9.1, 9.2, 9.3) vorgesehen ist, **dadurch gekennzeichnet, dass** die Laborroboteranordnung ein Arbeitsmodul (9, 9.1, 9.2, 9.3) umfasst, das als Pipettiermodul nach einem der vorhergehenden Ansprüche ausgebildet ist.

6. Laborroboteranordnung nach Anspruch 5, **dadurch gekennzeichnet, dass** an zumindest einem Robotermodul (1, 1.1,1.2, 1.3) zumindest zwei Y-Achsenarme (4, 4.2, 4.3, 5.1, 5.2) vorgesehen sind.

7. Laborroboteranordnung nach Anspruch 6, **dadurch gekennzeichnet, dass** beide Y-Achsenarme (4, 4.2, 4.3, 5.1, 5.2) zumindest eine Ankoppeleinrichtung (6) aufweisen.

8. Laborroboteranordnung nach einem der vorhergehenden Ansprüche 5 bis 7, **dadurch gekennzeichnet, dass** zumindest ein Y-Achsenarm (4, 4.2, 4.3, 5.1, 5.2) zwei Ankoppeleinrichtungen (6) aufweist.

9. Laborroboteranordnung nach Anspruch 8, **dadurch gekennzeichnet, dass** die Ankoppeleinrichtungen (6) am Y-Achsenarm unabhängig voneinander in Y-Richtung bewegbar sind.

10. Laborroboteranordnung nach einem der vorhergehenden Ansprüche 5 - 9, **dadurch gekennzeichnet, dass** ein austauschbares Dispensmodul (11) vorgesehen ist, das mit den Pipettiernadeln (54 - 57), insbesondere fluidisch, verbindbar ist.

11. Laborroboteranordnung nach einem der vorhergehenden Ansprüche 5 - 10, **dadurch gekennzeichnet, dass** die Laborroboteranordnung ein Arbeitsmodul (9, 9.1, 9.2, 9.3) umfasst, das als Greifer ausgebildet ist.

12. Laborroboteranordnung nach einem der vorhergehenden Ansprüche 5 - 11, **dadurch gekennzeichnet, dass** das Arbeitsmodul (9, 9.1, 9.2, 9.3) in Z-Richtung relativ zum Y-Achsenarm (4, 4.2, 4.3, 5.1, 5.2) bewegbar ist.

13. Laborroboteranordnung nach einem der vorhergehenden Ansprüche 5 - 12, **dadurch gekennzeichnet, dass** die Ankoppeleinrichtung (6) relativ zum Y-Achsenarm (4, 4.2, 4.3, 5.1, 5.2) in Z-Richtung bewegbar ist.

14. Laborroboteranordnung nach einem der vorhergehenden Ansprüche 5 - 13, **dadurch gekennzeichnet, dass** die Laborroboteranordnung ein Arbeitsmodul (9, 9.1, 9.2, 9.3) umfasst, das als Z-Achsenarm ausgebildet ist oder einen Z-Achsenarm umfasst.

## Claims

1. Pipetting module (9, 9.1, 9.2, 9.3) for a laboratory robot, with a plurality of pipetting needle holders (50 - 53) and/or pipetting needles (54 - 57), wherein the pipetting needle holders (50 - 53) and/or pipetting needles (54 - 57) are movable to a limited extent in a horizontal Y direction relative to the pipetting module, **characterized in that** the pipetting needle holders (50 - 53) and/or pipetting needles (54 - 57) are individually movable in a vertical Z direction relative to the pipetting module (9, 9.1, 9.2, 9.3).

2. Pipetting module according to Claim 1, **characterized in that** the spacings between adjacent pipetting needle holders (50 - 53) and/or pipetting needles (54 - 57) are adjustable in the range of 4 - 25 mm.

3. Pipetting module according to one of the preceding claims, **characterized in that** (ball) spindle drives (58 - 61), piezo drives or toothed rack drives are provided for moving the pipetting needle holders (50 - 53) and/or pipetting needles (54 - 57) in the Y direction.

4. Pipetting module according to one of the preceding claims, **characterized in that** toothed rack drives, piezo drives or (ball) spindle drives are provided for moving the pipetting needle holders (50 - 53) and/or pipetting needles (54 - 57) in the Z direction.

5. Laboratory robot assembly (10, 20) for the life sciences field, comprising at least a first robot module (1, 1.1, 1.2, 1.3) with an X-axis arm (2, 2.1, 2.2, 2.3) on which at least one Y-axis arm (4, 4.2, 4.3, 5.1, 5.2) is arranged movably in the X direction, wherein a coupling device (6) movable in the Y direction and used for coupling a work module (9, 9.1, 9.2, 9.3) is provided on the Y-axis arm (4, 4.2, 4.3, 5.1, 5.2), **characterized in that** the laboratory robot assembly comprises a work module (9, 9.1, 9.2, 9.3) designed as a pipetting module according to one of the preceding claims.

6. Laboratory robot assembly according to Claim 5, **characterized in that** at least two Y-axis arms (4, 4.2, 4.3, 5.1, 5.2) are provided on at least one robot module (1, 1.1, 1.2, 1.3).

7. Laboratory robot assembly according to Claim 6, **characterized in that** both Y-axis arms (4, 4.2, 4.3, 5.1, 5.2) have at least one coupling device (6).

8. Laboratory robot assembly according to one of Claims 5 to 7, **characterized in that** at least one Y-axis arm (4, 4.2, 4.3, 5.1, 5.2) has two coupling devices (6).

9. Laboratory robot assembly according to Claim 8, **characterized in that** the coupling devices (6) on the Y-axis arm are movable independently of each other in the Y direction.

10. Laboratory robot assembly according to one of Claims 5 - 9, **characterized in that** an exchangeable dispenser module (11) is provided, which can be connected, in particular fluidically, to the pipetting needles (54 - 57).

11. Laboratory robot assembly according to one of Claims 5 - 10, **characterized in that** the laboratory robot assembly comprises a work module (9, 9.1, 9.2, 9.3) designed as a gripper.

12. Laboratory robot assembly according to one of Claims 5 - 11, **characterized in that** the work module (9, 9.1, 9.2, 9.3) is movable in the Z direction relative to the Y-axis arm (4, 4.2, 4.3, 5.1, 5.2).

13. Laboratory robot assembly according to one of Claims 5 - 12, **characterized in that** the coupling device (6) is movable relative to the Y-axis arm (4, 4.2, 4.3, 5.1, 5.2) in the Z direction.

14. Laboratory robot assembly according to one of Claims 5 - 13, **characterized in that** the laboratory robot assembly comprises a work module (9, 9.1, 9.2, 9.3) designed as a Z-axis arm or comprising a Z-axis arm.

## Revendications

1. Module de pipetage (9, 9.1, 9.2, 9.3) pour un robot de laboratoire comportant plusieurs emplacements d'aiguilles de pipetage (50 - 53) et/ou plusieurs aiguilles de pipetage (54 - 57), dans lequel les emplacements d'aiguilles de pipetage (50 - 53) et/ou les aiguilles de pipetage (54 - 57) sont déplaçables de façon limitée dans la direction horizontale Y par rapport au module de pipetage, **caractérisé en ce que** les emplacements d'aiguilles de pipetage (50 - 53) et/ou les aiguilles de pipetage (54 - 57) sont déplaçables individuellement dans la direction verticale Z par rapport au module de pipetage (9, 9.1, 9.2, 9.3).

2. Module de pipetage selon la revendication 1, **caractérisé en ce que** les distances entre des emplacements d'aiguilles de pipetage voisins (50 - 53) et/ou des aiguilles de pipetage voisines (54 - 57) sont réglables dans la plage de 4 - 25 mm.

3. Module de pipetage selon l'une quelconque des revendications précédentes, **caractérisé en ce qu'**il est prévu, pour le déplacement des emplacements d'aiguilles de pipetage (50 - 53) et/ou des aiguilles de pipetage (54 - 57) dans la direction Y, des entraînements par broche (à billes) (58 - 61), des entraînements piézoélectriques ou des entraînements par crémaillère.

4. Module de pipetage selon l'une quelconque des revendications précédentes, **caractérisé en ce qu'**il est prévu, pour le déplacement des emplacements d'aiguilles de pipetage (50 - 53) et/ou des aiguilles de pipetage (54 - 57) dans la direction Z, des entraînements par crémaillère, des entraînements piézoélectriques ou des entraînements par broche (à billes).

5. Agencement de robot de laboratoire (10, 20) pour le domaine de la biologie, comprenant au moins un premier module de robot (1, 1.1, 1.2, 1.3) avec un bras d'axe X (2, 2.1, 2.2, 2.3), sur lequel au moins un bras d'axe Y (4, 4.2, 4.3, 5.1, 5.2) est disposé de façon déplaçable dans la direction X, dans lequel il est prévu sur le bras d'axe Y (4, 4.2, 4.3, 5.1, 5.2) un dispositif de couplage (6) déplaçable dans la direction Y pour le couplage d'un module de travail (9, 9.1, 9.2, 9.3), **caractérisé en ce que** l'agencement de robot de laboratoire comprend un module de travail (9, 9.1, 9.2, 9.3) qui est réalisé sous la forme d'un module de pipetage selon l'une quelconque des revendications précédentes.

6. Agencement de robot de laboratoire selon la revendication 5, **caractérisé en ce qu'**il est prévu au moins deux bras d'axe Y (4, 4.2, 4.3, 5.1, 5.2) sur au moins un module de robot (1, 1.1, 1.2, 1.3).

7. Agencement de robot de laboratoire selon la revendication 6, **caractérisé en ce que** les deux bras d'axe Y (4, 4.2, 4.3, 5.1, 5.2) présentent au moins un dispositif de couplage (6).

8. Agencement de robot de laboratoire selon l'une quelconque des revendications précédentes 5 à 7, **caractérisé en ce qu'**au moins un bras d'axe Y (4, 4.2, 4.3, 5.1, 5.2) présente deux dispositifs de couplage (6).

9. Agencement de robot de laboratoire selon la revendication 8, **caractérisé en ce que** les dispositifs de couplage (6) sont déplaçables dans la direction Y, indépendamment l'un de l'autre, sur le bras d'axe Y.

10. Agencement de robot de laboratoire selon l'une quelconque des revendications précédentes 5 à 9, **caractérisé en ce qu'**il est prévu un module de distribution remplaçable (11), qui peut être raccordé aux aiguilles de pipetage (54 - 57), notamment de manière fluidique.

11. Agencement de robot de laboratoire selon l'une quelconque des revendications précédentes 5 à 10, **caractérisé en ce que** l'agencement de robot de laboratoire comprend un module de travail (9, 9.1, 9.2, 9.3), qui est réalisé sous la forme d'une pince.

12. Agencement de robot de laboratoire selon l'une quelconque des revendications précédentes 5 à 11, **caractérisé en ce que** le module de travail (9, 9.1, 9.2, 9.3) est déplaçable dans la direction Z par rapport au bras d'axe Y (4, 4.2, 4.3, 5.1, 5.2).

13. Agencement de robot de laboratoire selon l'une quelconque des revendications précédentes 5 à 12, **caractérisé en ce que** le dispositif de couplage (6) est déplaçable dans la direction Z par rapport au bras d'axe Y (4, 4.2, 4.3, 5.1, 5.2).

14. Agencement de robot de laboratoire selon l'une quelconque des revendications précédentes 5 à 13, **caractérisé en ce que** l'agencement de robot de laboratoire comprend un module de travail (9, 9.1, 9.2, 9.3), qui est réalisé sous la forme d'un bras d'axe Z ou qui comprend un bras d'axe Z.
